# FASCICULE DE BREVET EUROPEEN

(11) **EP 1 556 659 B1**
(45) Date de publication et mention de la délivrance du brevet: **05.12.2007**
(21) Numéro de dépôt: 03767853.9
(22) Date de dépôt: 27.10.2003
(51) Int. Cl.: F28F 27/02

(54) **ECHANGEUR DE CHALEUR A REGULATION DE FLUX, EN PARTICULIER POUR VEHICULES AUTOMOBILES**
WÄRMETAUSCHER MIT DURCHFLUSSREGELUNG, INSBESONDERE FÜR KRAFTFAHRZEUGE
FLOW REGULATING HEAT EXCHANGER, IN PARTICULAR FOR MOTOR VEHICLES

(30) Priorité: 28.10.2002 FR 0213455
(43) Date de publication de la demande: 27.07.2005
(73) Titulaire: VALEO SYSTEMES THERMIQUES, 78320 Le Mesnil Saint-Denis (FR)
(72) Inventeur: CARRASCO MARTINS, Carlos, F-94800 Villejuif (FR); MAIRE, Arnaud, F-78180 Montigny le Bretonneux (FR)
(74) Mandataire: Rolland, Jean-Christophe
(86) Numéro de dépôt international: PCT/FR2003/003189
(87) Numéro de publication internationale: WO 2004/040226

(56) Documents cités:
- EP-A- 0 501 854
- FR-A- 1 063 749
- FR-A- 2 676 401
- GB-A- 2 166 862
- US-A- 5 915 464
- PATENT ABSTRACTS OF JAPAN vol. 011, no. 082 (M-571), 12 mars 1987 (1987-03-12) & JP 61 237998 A (TOYO RADIATOR KK), 23 octobre 1986 (1986-10-23)

## Description

L'invention se rapporte au domaine des échangeurs de chaleur, notamment pour véhicules automobiles.

Elle concerne plus particulièrement un échangeur de chaleur comprenant au moins une boîte collectrice divisée par une cloison fixe en un compartiment d'entrée et un compartiment de sortie, un corps d'échange de chaleur composé de deux nappes qui communiquent entre elles et débouchent respectivement dans le compartiment d'entrée et dans le compartiment de sortie, ainsi qu'une tubulure d'entrée et une tubulure de sortie qui débouchent dans la boîte collectrice pour la circulation d'un fluide.

Dans un tel échangeur de chaleur, le fluide pénètre dans le compartiment d'entrée, parcourt successivement les deux nappes d'échange de chaleur pour gagner le compartiment de sortie, qu'il quitte ensuite par la tubulure de sortie. Ainsi, la circulation du fluide s'effectue en deux passes, selon un circuit en U, également appelé circuit à circulation méthodique.

Le corps d'échange de chaleur est composé de deux nappes, le terme «nappe» étant pris ici dans un sens général pour désigner une partie du corps d'échange de chaleur. Les deux nappes sont le plus souvent formées respectivement par deux rangées de tubes auxquels sont associées des ailettes d'échange de chaleur. Il peut s'agir soit d'ailettes planes traversées par les tubes, soit encore d'ailettes ondulées, encore appelées intercalaires ondulés, qui sont placées entre les tubes. Les deux nappes peuvent aussi être formées par d'autres moyens, par exemple par des plaques empilées, etc.

Les échangeurs de chaleur du type précité peuvent être utilisés, par exemple, pour constituer un refroidisseur d'air de suralimentation destiné à refroidir un flux d'air sous pression qui sert à l'alimentation d'un moteur thermique de véhicule automobile. Dans cette application particulière, le flux d'air, qui a été comprimé et donc échauffé par le turbocompresseur du moteur, doit être refroidi avant d'être envoyé dans la chambre d'admission du moteur. Ce flux d'air est classiquement refroidi par échange thermique avec un flux d'air extérieur en formant un échangeur du type air/air.

De tels échangeurs de chaleur sont conçus pour être traversés en permanence par le fluide à traiter, par exemple un flux d'air à refroidir.

Si l'on souhaite réguler le flux du fluide qui traverse l'échangeur de chaleur ou le détourner de l'échangeur de chaleur, il faut prévoir des moyens de dérivation et une ou plusieurs vannes, ce qui complique la réalisation du circuit.

Le document EP 1 336 736, cité au titre de l'article 54(3) CBE, propose un échangeur de chaleur comprenant une boîte collectrice divisée par deux cloisons fixes en un compartiment d'entrée, un compartiment de sortie et deux compartiments de déviation.

Les documents WO 01/53768 et JP 61 237998 proposent chacun un échangeur de chaleur comprenant un corps d'échange de chaleur et une boîte collectrice présentant un compartiment d'entrée et un compartiment de sortie. La boite collectrice comporte en outre un volet mobile déplaçable entre une position de dérivation et une position normale permettant au fluide de traverser l'échangeur de chaleur.

L'invention a notamment pour but de surmonter les inconvénients précités.

Elle vise notamment à procurer un échangeur de chaleur du type défini précédemment, qui permette une régulation du flux du fluide qui le traverse.

L'invention vise encore à procurer un tel échangeur de chaleur qui permet de faire passer le fluide au travers de l'échangeur ou encore de le dévier de l'échangeur.

Elle vise aussi à procurer un échangeur de chaleur du type précité qui convient tout particulièrement à une utilisation en tant que refroidisseur d'air de suralimentation d'un moteur thermique.

L'invention propose à cet effet un échangeur de chaleur du type défini en introduction, dans lequel la boîte collectrice loge une vanne ayant un organe mobile déplaçable entre une position de dérivation, en laquelle le fluide est apte à circuler depuis la tubulure d'entrée vers la tubulure de sortie, sans traverser les nappes d'échange de chaleur, et une position normale en laquelle le fluide est apte à circuler depuis la tubulure d'entrée vers la tubulure de sortie, en traversant les nappes d'échange de chaleur. La tubulure de sortie débouche directement dans le compartiment d'entrée et en ce que l'organe mobile de la vanne est agencé pour coopérer avec une ouverture de passage aménagée dans la cloison au droit d'une tubulure choisie parmi la tubulure d'entrée et la tubulure de sortie.

Ainsi, la boîte collectrice loge directement une vanne qui permet de contrôler la circulation du fluide et de faire fonctionner l'échangeur de chaleur soit dans une position de dérivation, soit dans une position normale.

Dans la position de dérivation, le fluide ne traverse pas les nappes d'échange de chaleur et ne subit donc pas d'échange thermique.

En revanche, dans la position normale, le fluide parcourt les nappes d'échange de chaleur et subit donc un échange thermique.

De manière classique, la tubulure d'entrée débouche dans le compartiment d'entrée.

Selon une caractéristique avantageuse de l'invention, l'organe mobile de la vanne coopère avec la boîte collectrice pour empêcher, dans la position de dérivation, la circulation du fluide dans le compartiment de sortie. Ceci permet de raccourcir le cheminement du fluide entre la tubulure d'entrée et la tubulure de sortie.

Dans une forme de réalisation préférée de l'invention, la tubulure de sortie débouche directement dans le compartiment d'entrée, tandis que l'organe mobile de la vanne est agencé pour coopérer avec une ouverture de passage aménagée dans la cloison, au droit d'une tubulure choisie parmi la tubulure d'entrée et la tubulure de sortie.

Dans cette forme de réalisation préférentielle, l'organe mobile de la vanne comprend avantageusement un clapet mobile en translation. Dans la position de dérivation, ce clapet ferme l'ouverture de passage et permet au fluide d'accéder au compartiment d'entrée par la tubulure d'entrée et de quitter le compartiment d'entrée par la tubulure de sortie. Dans la position normale, le clapet ouvre l'ouverture de passage et permet au fluide d'accéder au compartiment d'entrée, de parcourir les deux nappes d'échange de chaleur pour gagner le compartiment de sortie et de quitter ce compartiment de sortie par la tubulure de sortie.

La vanne permet ainsi de contrôler le fluide qui traverse l'échange de chaleur, sans prévoir un circuit complexe extérieur à l'échangeur de chaleur.

Dans le dernier cas, l'organe mobile de la vanne comprend, en outre, un élément tubulaire solidaire en translation du clapet. Dans la position de dérivation, cet élément tubulaire s'escamote dans la tubulure choisie. Dans la position normale, cet élément tubulaire s'étend transversalement dans le compartiment d'entrée pour établir une communication directe entre le compartiment de sortie et la tubulure choisie.

Le clapet et l'élément tubulaire sont avantageusement liés entre eux par une tige axiale, en délimitant un passage annulaire entre eux.

L'échangeur de chaleur de l'invention comprend avantageusement des moyens moteurs agencés pour déplacer en translation l'organe mobile de la vanne et l'amener soit dans la position de dérivation, soit dans la position normale, soit dans une position intermédiaire entre la position de dérivation et la position normale. Une telle position intermédiaire permet de procurer une régulation de la température.

Dans une forme de réalisation de l'invention, les moyens moteurs comprennent un moteur électrique entraînant un axe fileté coopérant avec un élément taraudé solidaire de l'organe mobile de la vanne.

Dans une autre forme de réalisation, les moyens moteurs comprennent une capsule à dépression solidaire de l'organe mobile de la vanne.

Encore dans une autre forme encore de réalisation, les moyens moteurs comprennent une capsule thermostatique à cire solidaire de l'organe mobile de la vanne.

La tubulure choisie, avec laquelle coopère l'organe mobile de la vanne, est avantageusement la tubulure de sortie. Cependant, le dispositif pourrait également fonctionner avec la tubulure d'entrée.

Dans une forme de réalisation préférée de l'invention, les deux nappes d'échange de chaleur sont formées respectivement par deux rangées de tubes qui communiquent entre elles par une autre boîte collectrice.

Comme déjà indiqué, l'échangeur de chaleur de l'invention est avantageusement réalisé sous la forme d'un refroidisseur d'air de suralimentation qui est agencé pour être traversé par un flux d'air destiné à la suralimentation d'un moteur thermique.

Dans la description qui suit, faite seulement à titre d'exemple, on se réfère aux dessins annexés, sur lesquels :
- la Figure 1 est une vue de face d'un échangeur de chaleur selon l'invention ;
- la Figure 2 est une vue de côté de l'échangeur de chaleur de la Figure 1 avec une coupe partielle selon la ligne II-II de la Figure 1 ;
- la Figure 3 est une vue en coupe axiale de l'organe mobile de la vanne faisant partie de l'échangeur de chaleur des Figures 1 et 2 ;
- la Figure 4 est une vue en coupe de la boîte collectrice de l'échangeur de chaleur des Figures 1 et 2 montrant la vanne en position de dérivation ;
- la Figure 5 est une vue analogue à la Figure 4 montrant la vanne en position normale ;
- la Figure 6 est une vue schématique en coupe transversale selon la ligne VI-VI de la Figure 1, la vanne étant en position de dérivation ; et
- la Figure 7 est une vue en coupe analogue à la Figure 6 montrant la vanne en position normale.

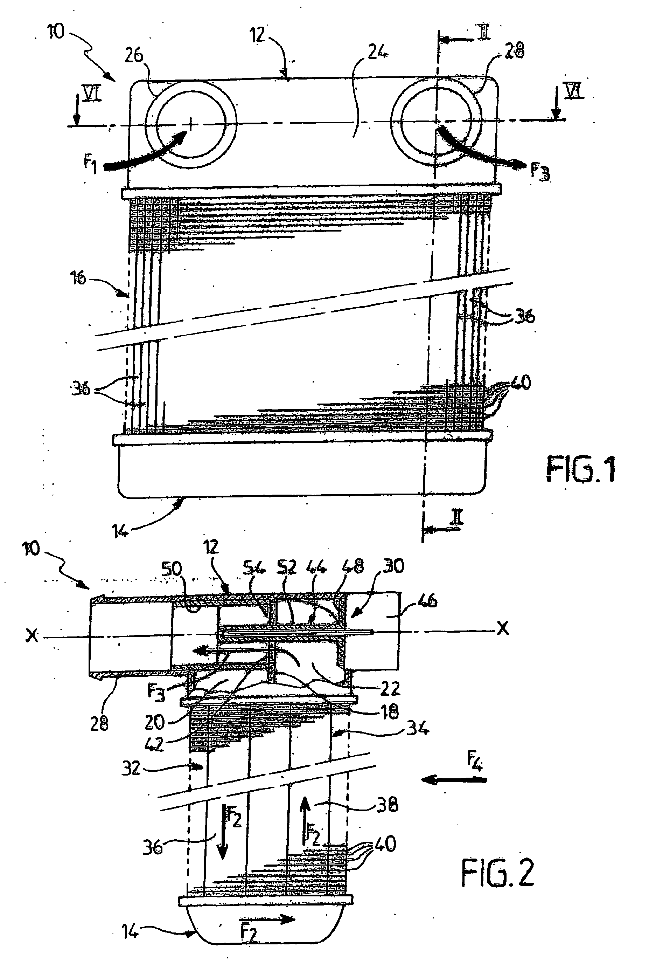

On se réfère d'abord aux Figures 1 et 2 qui montrent un échangeur de chaleur 10 qui constitue, dans cet exemple, un refroidisseur d'air de suralimentation. Un tel refroidisseur est destiné à refroidir un flux d'air comprimé et chaud provenant d'un turbocompresseur et destiné à alimenter un moteur thermique de véhicule automobile.

L'échangeur de chaleur 10 comprend une boîte collectrice 12, ici en partie supérieure, reliée à une autre boîte collectrice 14, ici en partie inférieure, par un corps 16 d'échange de chaleur. La boîte collectrice 12 est de forme générale allongée et elle est divisée, sur toute sa longueur, par une cloison fixe 18 (Figure 2) en un compartiment d'entrée 20 et un compartiment de sortie 22. Sur une face latérale 24 de la boîte collectrice 12 sont prévues deux tubulures : une tubulure d'entrée 26 et une tubulure de sortie 28 pour un fluide, ici pour l'air de suralimentation. La tubulure 26 débouche dans le compartiment d'entrée 20 pour permettre au fluide de pénétrer dans le compartiment d'entrée 20, comme montré par la flèche F1 sur la Figure 1. La tubulure de sortie 28 débouche directement dans le compartiment d'entrée 20, et non pas dans le compartiment de sortie 22 comme dans un échangeur de chaleur habituel.

Comme on le verra plus loin de manière détaillée, la boîte collectrice loge une vanne 30 qui permet de faire communiquer la tubulure de sortie 28 soit avec le compartiment d'entrée 20, soit avec le compartiment de sortie 22, soit avec les deux compartiments à la fois et avec une proportion réglable.

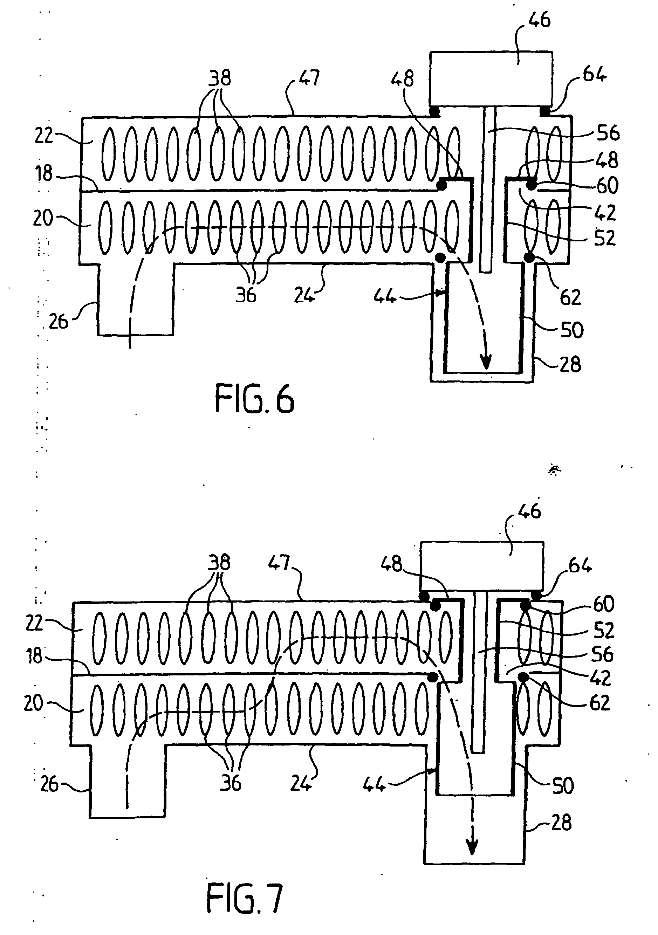

Le corps 16 d'échangeur de chaleur est composé de deux nappes, le terme nappe étant à prendre au sens général pour désigner deux parties du corps 16 susceptibles d'être parcourus successivement par le fluide à traiter. Une première nappe 32 relie le compartiment d'entrée 20 à la boîte collectrice 14 qui constitue une boîte de retour de fluide, tandis qu'une deuxième nappe 34 relie le compartiment de sortie 22 à la même boîte collectrice 14 (Figure 2). Dans l'exemple, la nappe 32 est formée d'une série de tubes 36 parallèles ayant une section elliptique allongée, comme on peut le voir sur les Figures 6 et 7. De même, la nappe 34 est composée d'une autre rangée de tubes 38 analogues. Les tubes 36 et 38 traversent conjointement une série d'ailettes 40 augmentant la surface d'échange de chaleur.

Dans la position normale d'utilisation de l'échangeur de chaleur (Figures 2 et 5), le fluide (ici l'air) gagne le compartiment d'entrée 20 par la tubulure d'entrée 26 (flèche F1), gagne ensuite la boîte collectrice 14 en passant par les tubes 36 de la nappe 32, puis le compartiment de sortie 22 en passant par les tubes 38 de la nappe 34 (flèches F2 sur la Figure 5). Le fluide quitte ensuite le compartiment de sortie 22 par des aménagements particuliers de la vanne 30 pour sortir par la tubulure de sortie 28, comme montré par la flèche F3 sur les Figures 2 et 5. Dans le corps de l'échangeur de chaleur, le fluide adopte une circulation en U, comme montré par les flèches F2 sur les Figure 2 et 5.

Le fluide qui traverse l'échangeur de chaleur (ici l'air de suralimentation) est refroidi par échange thermique avec un flux d'air qui balaye le corps de l'échangeur, comme montré par la flèche F4 sur la Figure 2.

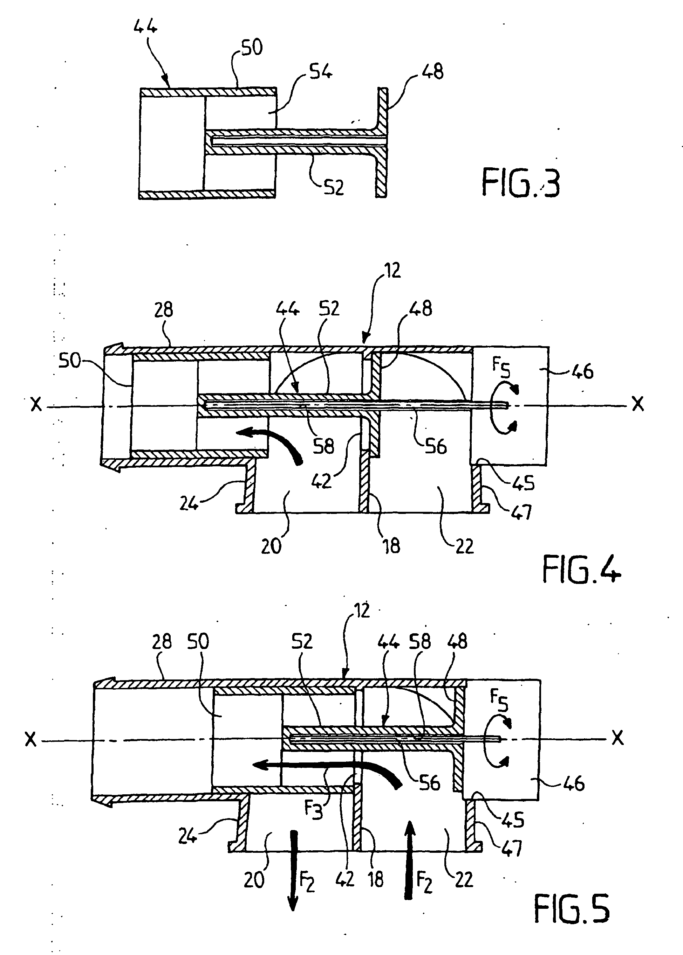

La structure et le fonctionnement de la vanne 30 logée dans la boîte collectrice 12 sera décrite maintenant de façon plus détaillée en référence aux Figures 3 à 5. La Figure 3 montre l'organe mobile de la vanne, tandis que les Figures 4 et 5 montrent deux positions différentes de la vanne. La tubulure de sortie 28 est une tubulure cylindrique circulaire d'axe XX qui se rattache perpendiculairement à la face 24. Dans l'épaisseur de la cloison 18, est aménagée une ouverture de passage 42 au droit, c'est-à-dire dans l'axe de la tubulure 28. Cette ouverture 42 est circulaire et centrée sur l'axe XX.

La vanne 30 comprend un organe mobile 44 (représenté seul sur la Figure 3) déplaçable en translation dans la direction de l'axe XX, dans un sens ou dans l'autre, sous l'action d'un moteur 46, dans l'exemple un moteur électrique. Ce moteur 46 est monté de façon étanche dans une ouverture 45 aménagée dans une face 47 de la boîte collectrice 12 qui délimite le compartiment de sortie 22.

L'organe mobile 44 comprend un clapet 48 de forme circulaire qui, dans la position de la Figure 4, est apte à fermer de façon étanche l'ouverture de passage 42 pour isoler complètement le compartiment d'entrée 20 et le compartiment de sortie 22. L'organe mobile 44 comprend aussi un élément tubulaire 50 qui est agencé pour pouvoir coulisser à l'intérieur de la tubulure de sortie 28, comme on le voit sur la Figure 3. Cet élément tubulaire est rattaché au clapet 48 par une tige axiale 52. La liaison entre la tige et l'élément tubulaire s'effectue, par exemple, par des bras radiaux en délimitant une ouverture annulaire 54 pour le passage du fluide, comme on le verra plus loin.

L'élément tubulaire 50 s'étend sur une longueur axiale suffisante pour permettre, dans la position de la Figure 5, de relier de manière étanche l'ouverture de passage 42 (donc le compartiment de sortie 22) et la tubulure de sortie 28. Pour cela, des joints étanches, qui seront décrits plus loin, assurent l'étanchéité des connexions.

Le déplacement en translation de l'organe mobile 44 par le moteur 46 s'effectue par un axe fileté 56 entraîné en rotation par le moteur 46 dans un sens ou dans l'autre, comme montré par la flèche F5, et coopérant avec un élément taraudé 58, ici formé dans la tige axiale 52. Sous l'action du moteur 46, l'organe mobile 44 peut être amené soit dans la position de la Figure 4, soit dans la position de la Figure 5, soit en toute autre position intermédiaire.

Dans la position de la Figure 4, qui constitue une position de dérivation, le clapet 48 ferme l'ouverture 42, tandis que l'élément tubulaire 50 est escamoté, au moins en partie, à l'intérieur de la tubulure 28. Il en résulte que le fluide (ici l'air) qui gagne le compartiment d'entrée 20 est obligé de le quitter aussitôt par la tubulure de sortie 28 en traversant l'élément tubulaire 50. Dans cette position de dérivation, le fluide n'est pas autorisé à parcourir le corps 16 et ne subit donc pas d'échange thermique.

Dans la position de la Figure 5, qui constitue la position normale, le clapet 48 s'escamote, au moins en partie, dans la boîte collectrice. Par ailleurs, l'élément tubulaire 50 établit une liaison directe entre le compartiment de sortie 22 et la tubulure de sortie 28. Ainsi, le fluide qui accède au compartiment d'entrée 20 par la tubulure d'entrée 26 circule dans la nappe 32 pour gagner la boîte collectrice 14, circule ensuite dans la nappe 34 pour gagner le compartiment de sortie 22 (flèches F2). Il quitte ce compartiment de sortie 22 par l'élément tubulaire 50 et la tubulure de sortie 28 (flèche F3). Il est possible aussi de placer l'organe mobile 40 en des positions intermédiaires entre celles représentées aux Figures 4 et 5. Ces positions intermédiaires permettent une régulation de température en ajustant le débit du fluide qui traverse l'échangeur de chaleur.

Sur la coupe de la Figure 6, on distingue tous les éléments décrits précédemment, en particulier les extrémités des tubes 36 débouchant dans le compartiment d'entrée 20 et des tubes 38 débouchant dans le compartiment de sortie 22. On distingue également un joint d'étanchéité 60 qui entoure le clapet 48 et un joint d'étanchéité 62 qui entoure l'élément tubulaire 50 au niveau de son extrémité qui est raccordée à la tige axiale 56. Un autre joint d'étanchéité 64 est prévu à la liaison du moteur électrique 46 et de la face 47 de la boîte collectrice 12. Ainsi, ce moteur peut être rapporté de façon étanche à partir de l'extérieur, au travers d'une ouverture appropriée aménagée dans la face 47.

Sur la Figure 6, qui correspond au mode de fonctionnement de la Figure 4, on voit que le fluide qui accède au compartiment d'entrée 20 le quitte aussitôt par l'élément tubulaire 50 et la tubulure de sortie 28.

Dans la position de la Figure 7, qui correspond à celle de la Figure 5, on voit que le fluide pénètre dans le compartiment d'entrée 20, circule dans les tubes 36 pour gagner la boîte collectrice 14, circule ensuite au travers des tubes 38 pour gagner le compartiment de sortie 32. De là, le fluide quitte l'échangeur de chaleur en passant successivement par l'élément tubulaire 50 et la tubulure de sortie 28. L'échangeur de chaleur de l'invention est susceptible de nombreuses variantes de réalisation.

Ainsi, l'organe mobile de la vanne pourrait être associé non pas à la tubulure de sortie 28, mais à la tubulure d'entrée 26. Egalement, au lieu d'utiliser un moteur électrique 46, en particulier de type pas à pas, d'autres moyens moteurs sont envisageables.

Dans une variante de réalisation (non représentée), le moteur est remplacé par une capsule à dépression qui entraîne directement l'organe mobile 44.

Dans une autre variante, et si la température de sortie du fluide est une valeur fixe, les moyens moteurs peuvent comprendre une capsule thermostatique à cire. Cette capsule peut être soit reliée à l'organe mobile 44, soit intégrée à celui-ci.

En outre, comme déjà indiqué, le corps d'échange de chaleur n'est pas obligatoirement constitué par des tubes d'échange de chaleur associés à des ailettes ou à des intercalaires ondulés. Il est envisageable aussi d'utiliser d'autres moyens d'échange de chaleur, par exemple des plaques empilées.

## Revendications

1. Echangeur de chaleur (10) comprenant au moins une boîte collectrice (12) divisée par une cloison fixe (18) en un compartiment d'entrée (20) et un compartiment de sortie (22), un corps d'échange de chaleur composé de deux nappes (32, 34) qui communiquent entre elles et débouchent respectivement dans le compartiment d'entrée (20) et dans le compartiment de sortie (22), ainsi qu'une tubulure d'entrée (26) et une tubulure de sortie (28) qui débouchent dans la boîte collectrice pour la circulation d'un fluide, la boîte collectrice (12) logeant une vanne (30) ayant un organe mobile (44) déplaçable entre une position de dérivation, en laquelle le fluide est apte à circuler depuis la tubulure d'entrée (26) vers la tubulure de sortie (28), sans traverser les nappes (32, 34) d'échange de chaleur, et une position normale en laquelle le fluide est apte à circuler depuis la tubulure d'entrée (26) vers la tubulure de sortie (28), en traversant les nappes (32, 34) d'échange de chaleur, **caractérisé en ce que** la tubulure de sortie (28) débouche directement dans le compartiment d'entrée (20) et **en ce que** l'organe mobile (44) de la vanne (30) est agencé pour coopérer avec une ouverture de passage (42) aménagée dans,la cloison (18) au droit d'une tubulure choisie parmi la tubulure d'entrée (26) et la tubulure de sortie (28).

2. Echangeur de chaleur selon la revendication 1, **caractérisé en ce que** l'organe mobile (44) de la vanne (30) coopère avec la boîte collectrice (12) pour empêcher, dans la position de dérivation, la circulation du fluide dans le compartiment de sortie (22).

3. Echangeur de chaleur selon la revendication précédente, **caractérisé en ce que** l'organe mobile (44) de la vanne (30) comprend un clapet (48) mobile en translation qui, dans la position de dérivation, ferme l'ouverture de passage (42) pour permettre au fluide d'accéder au compartiment d'entrée (20) par la tubulure d'entrée (26) et de quitter le compartiment d'entrée (20) par la tubulure de sortie (28) et qui, dans la position normale, ouvre l'ouverture de passage (42) pour permettre au fluide d'accéder au compartiment d'entrée (20), de parcourir les deux nappes (32, 34) d'échange de chaleur pour gagner le compartiment de sortie (22) et de quitter ce compartiment de sortie par la tubulure de sortie (28).

4. Echangeur de chaleur selon la revendication précédente, **caractérisé en ce que** l'organe mobile (44) de la vanne comprend en outre un élément tubulaire (50) solidaire en translation du clapet (48) qui, dans la position de dérivation, s'escamote dans la tubulure choisie (28) et qui, dans la position normale, s'étend transversalement dans le compartiment d'entrée (20) pour établir une communication directe entre le compartiment de sortie (22) et la tubulure choisie (28).

5. Echangeur de chaleur selon la revendication précédente, **caractérisé en ce que** le clapet (48) et l'élément tubulaire (50) sont liés entre eux par une tige axiale (52) en délimitant un passage annulaire (54) entre eux.

6. Echangeur de chaleur selon l'une des revendications précédentes, **caractérisé en ce qu'**il comprend des moyens moteurs (46) agencés pour déplacer en translation l'organe mobile (42) de la vanne (30) et l'amener soit dans la position de dérivation, soit dans la position normale, soit dans au moins une position intermédiaire entre la position de dérivation et la position normale.

7. Echangeur de chaleur selon la revendication précédente, **caractérisé en ce que** les moyens moteurs comprennent un moteur électrique (46) entraînant un axe fileté (56) coopérant avec un élément taraudé (58) solidaire de l'organe mobile (44) de la vanne.

8. Echangeur de chaleur selon la revendication précédente, prise en combinaison avec la revendication 6, **caractérisé en ce que** l'élément taraudé (58) est formé dans la tige axiale (52).

9. Echangeur de chaleur selon la revendication 6, **caractérisé en ce que** les moyens moteurs comprennent une capsule à dépression, solidaire de l'organe mobile (44) de la vanne.

10. Echangeur de chaleur selon la revendication 6, **caractérisé en ce que** les moyens moteurs comprennent une capsule thermostatique à cire, solidaire de l'organe mobile (44) de la vanne.

11. Echangeur de chaleur selon l'une des revendications 2 à 10, **caractérisé en ce que** la tubulure choisie est la tubulure de sortie (28).

12. Echangeur de chaleur selon l'une des revendications précédentes, **caractérisé en ce que** les deux nappes d'échange de chaleur sont formées respectivement par deux rangées de tubes (36, 38) qui communiquent entre elles par une autre boîte collectrice (14).

13. Echangeur de chaleur selon l'une des revendications précédentes, **caractérisé en ce qu'**il est réalisé sous la forme d'un refroidisseur d'air de suralimentation qui est agencé pour être traversé par un flux d'air destiné à la suralimentation d'un moteur thermique.

## Claims

1. Heat exchanger (10) comprising at least one header (12) divided by a fixed partition (18) into an inlet compartment (20) and an outlet compartment (22), a heat exchange body composed of two sheets (32, 34) that communicate with each other and emerge in the inlet compartment (20) and in the outlet compartment (22) respectively, and also an inlet nozzle (26) and an outlet nozzle (28) which open into the header for the circulation of a fluid, the header (12) housing a valve (30) having a moveable member (44) that can move between a bypass position, in which the fluid can flow from the inlet nozzle (26) to the outlet nozzle (28) without passing through the heat exchange sheets (32, 34), and a normal position in which the fluid can flow from the inlet nozzle (26) to the outlet nozzle (28) while passing through the heat exchange sheets (32, 34), **characterized in that** the outlet nozzle (28) opens directly into the inlet compartment (20) and **in that** the moveable member (44) of the valve (30) is designed to cooperate with a passage opening (42) made in the partition (18) in line with a nozzle chosen from the inlet nozzle (26) and the outlet nozzle (28).

2. Heat exchanger according to Claim 1, **characterized in that** the moveable member (44) of the valve (30) cooperates with the header (12) in order to prevent, in the bypass position, the fluid from flowing into the outlet compartment (22).

3. Heat exchanger according to the preceding claim, **characterized in that** the moveable member (44) of the valve (30) comprises a valve spool (48) that can move translationally, which valve spool, in the bypass position, closes off the passage opening (42) to allow the fluid to enter the inlet compartment (20) via the inlet nozzle (26) and to leave the inlet compartment (20) via the outlet nozzle (28) and, in the normal position, opens the passage opening (42) to allow the fluid to enter the inlet compartment (20), to travel along the two heat exchange sheets (32, 34), in order to reach the outlet compartment (22), and to leave this outlet compartment via the outlet nozzle (28).

4. Heat exchanger according to the preceding claim, **characterized in that** the moveable member (44) of the valve furthermore includes a tubular element (50) that moves translationally as one with the valve spool (48), which, in the bypass position, retracts into the chosen nozzle (28) and which, in the normal position, extends transversely in the inlet compartment (20) in order to establish direct communication between the outlet compartment (22) and the chosen nozzle (28).

5. Heat exchanger according to the preceding claim, **characterized in that** the valve spool (48) and the tubular element (50) are linked together by an axial rod (52) that defines an annular passage (54) between them.

6. Heat exchanger according to one of the preceding claims, **characterized in that** it includes drive means (46) designed to move the moveable member (44) of the valve (30) translationally and to bring it either into the bypass position or into the normal position, or into at least one intermediate position between the bypass position and the normal position.

7. Heat exchanger according to the preceding claim, **characterized in that** the drive means comprise an electric motor (46) driving a threaded shaft (56) that cooperates with a tapped element (58) integral with the moveable member (44) of the valve.

8. Heat exchanger according to the preceding claim, taken in combination with Claim 6, **characterized in that** the tapped element (58) is formed in the axial shaft (52).

9. Heat exchanger according to Claim 6, **characterized in that** the drive means comprise a vacuum capsule integral with the moveable member (44) of the valve.

10. Heat exchanger according to Claim 6, **characterized in that** the drive means comprise a wax capsule thermostat integral with the moveable member (44) of the valve.

11. Heat exchanger according to one of Claims 2 to 10, **characterized in that** the nozzle chosen is the outlet nozzle (28).

12. Heat exchanger according to one of the preceding claims, **characterized in that** the two heat exchange sheets are formed by two rows of tubes (36, 38) respectively, which communicate with each other via another header (14).

13. Heat exchanger according to one of the preceding claims, **characterized in that** it is produced in the form of a supercharging air cooler through which a stream of air intended for supercharging an internal combustion engine is designed to pass.

## Patentansprüche

1. Wärmetauscher (10), umfassend mindestens einen Sammelkasten (12), der durch eine feste Trennwand (18) in ein Eingangsabteil (20) und ein Ausgangsabteil (22) geteilt ist, einen Wärmeaustauschkörper, der aus zwei Schichten (32, 34) besteht, die miteinander in Verbindung stehen und in das Eingängsabteil (20) bzw. das Ausgangsabteil (22) münden, sowie ein Eingangsrohr (26) und ein Ausgangsrohr (28), die in den Sammelkasten für die Zirkulation eines Fluids münden, wobei der Sammelkasten (12) ein Ventil (30) beherbergt, das ein bewegliches Element (44) besitzt, das zwischen einer Abzweigungsposition, in der das Fluid vom Eingangsrohr (26) zum Ausgangsrohr (28) zirkulieren kann, ohne die Wärmeaustauschschichten (32, 34) zu durchqueren, und einer Normalposition verschoben werden kann, in der das Fluid vom Eingangrohr (26) zum Ausgangsrohr (28) zirkulieren kann, wobei es die Wärmeaustauschschichten (32, 34) durchquert, **dadurch gekennzeichnet, dass** das Ausgangsrohr (28) direkt in das Eingangsabteil (20) mündet, und dass das bewegliche Element (44) des Ventils (30) derart angeordnet ist, dass es mit einer Durchgangsöffnung (42) zusammenwirkt, die in der Trennwand (18) in der Verlängerung eines Rohrs, das zwischen dem Eingangsrohr (26) und dem Ausgangsrohr (28) ausgewählt wird, vorgesehen ist.

2. Wärmetauscher nach Anspruch 1, **dadurch gekennzeichnet, dass** das bewegliche Element (44) des Ventils (30) mit dem Sammelkasten (12) zusammenwirkt, um in der Abzweigungsposition die Zirkulation des Fluids im Ausgangsabteil (22) zu verhindern.

3. Wärmetauscher nach dem vorhergehenden Anspruch, **dadurch gekennzeichnet, dass** das bewegliche Element (44) des Ventils (30) eine in Translation bewegliche Klappe (48) umfasst, die in der Abzweigungsposition die Durchgangsöffnung (42) verschließt, um es dem Fluid zu ermöglichen, zum Eingangsabteil (20) durch das Eingangsrohr (26) zu gelangen und das Eingangsabteil (20) durch das Ausgangsrohr (28) zu verlassen, und die in der Normalposition die Durchgangsöffnung (42) öffnet, um es dem Fluid zu ermöglichen zum Eingangsabteil (20) zu gelangen, die beiden Wärmeaustauschschichten (32, 34) zu durchqueren, um zum Ausgangsabteil (22) zu gelangen, und dieses Ausgangsabteil durch das Ausgangsrohr (28) zu verlassen.

4. Wärmetauscher nach dem vorhergehenden Anspruch, **dadurch gekennzeichnet, dass** das bewegliche Element (44) des Ventils ferner ein röhrenförmiges Element (50) umfasst, das in Translation mit der Klappe (48) verbunden ist, die sich in der Abzweigungsposition in das ausgewählte Rohr (28) einzieht, und die sich in Normalposition quer in dem Eingangsabteil (20) erstreckt, um eine direkte Verbindung zwischen dem Ausgangsabteil (22) und dem ausgewählten Rohr (28) herzustellen.

5. Wärmetauscher nach dem vorhergehenden Anspruch, **dadurch gekennzeichnet, dass** die Klappe (48) und das röhrenförmige Element (50) miteinander durch eine Axialstange (52) verbunden sind, wobei sie zwischen sich einen ringförmigen Durchgang (54) begrenzen.

6. Wärmetauscher nach einem der vorhergehenden Ansprüche, **dadurch gekennzeichnet, dass** er Antriebsmittel (46) umfasst, die derart angeordnet sind, dass sie in Translation das bewegliche Element (44) des Ventils (30) verschieben und es entweder in die Abzweigungsposition oder in die Normalposition oder in mindestens eine Zwischenposition zwischen der Abzweigungsposition und der Normalposition bringen.

7. Wärmetauscher nach dem vorhergehenden Anspruch, **dadurch gekennzeichnet, dass** die Antriebsmittel einen Elektromotor (46) umfassen, der eine Gewindeachse (56) antreibt, die mit einem Gewindeelement (58) zusammenwirkt, die mit dem beweglichen Element (44) des Ventils verbunden ist.

8. Wärmetauscher nach dem vorhergehenden Anspruch in Kombination mit Anspruch 6, **dadurch gekennzeichnet, dass** das Gewindeelement (58) in der Axialstange (52) ausgebildet ist.

9. Wärmetauscher nach Anspruch 6, **dadurch gekennzeichnet, dass** die Antriebsmittel eine Unterdruckkapsel umfassen, die mit dem beweglichen Element (44) des Ventils verbunden ist.

10. Wärmetauscher nach Anspruch 6, **dadurch gekennzeichnet, dass** die Antriebsmittel eine thermostatische Wachskapsel umfassen, die mit dem beweglichen Element (44) des Ventils verbunden ist.

11. Wärmetauscher nach einem der Ansprüche 2 bis 10, **dadurch gekennzeichnet, dass** das ausgewählte Rohr das Ausgangsrohr (28) ist.

12. Wärmetauscher nach einem der vorhergehenden Ansprüche, **dadurch gekennzeichnet, dass** die beiden Wärmeaustauschschichten jeweils von zwei Rohrreihen (36, 38) gebildet sind, die miteinander durch einen weiteren Sammelkasten (14) in Verbindung stehen.

13. Wärmetauscher nach einem der vorhergehenden Ansprüche, **dadurch gekennzeichnet, dass** er in Form eines Aufladeluftkühlers ausgeführt ist, der derart angeordnet ist, dass er von einem Luftstrom durchquert wird, der zum Aufladen eines Verbrennungsmotors bestimmt ist.
